# EUROPEAN PATENT APPLICATION

(11) **EP 1 707 939 A1**
(43) Date of publication of application: **04.10.2006**
(21) Application number: 06380061.9
(22) Date of filing: 28.03.2006
(51) Int. Cl.: G01N 1/38

(54) **Gravimetric diluter**

(30) Priority: 28.03.2005 ES 200500709
(71) Applicant: IUL, S.A., 08030 Barcelona (ES)
(72) Inventor: Lleonart Aliberas, Miguell, 08035 Barcelona (ES)
(74) Representative: Ungria Lopez, Javier

(57) **Abstract**

A loading cell regulated by a control circuit (4) for weighing the sample to dilute and calculating the quantity of diluent liquid to add depending on the measurement made in order to obtain the desired dilution according to a predetermined factor,
characterised in that it comprises a support (8) combined into the diluter to which is vertically fixed a diluent tank (9) on a container receptacle (1) of the sample to dilute, and whose outlet is blocked by means of a pincer valve (10) regulated by the control circuit (4) so that the diluent can fall under gravity on the container receptacle (1).

A very compact arrangement is obtained and at a cost very much lower than that of conventional diluters.

## Description

### OBJECT OF THE INVENTION

The improvements of the invention apply to gravimetric diluters which achieve dilution according to the desired factor in a way that is totally automatic without the intervention of an operator; and which have the aim of modifying their structure in such a way that a more compact and much more economical structure is obtained.

### PRIOR ART OF THE INVENTION

In the state of the art the use is known of gravimetric diluters which comprise a set of scales or loading cell for measuring the mass of the sample to dilute and on the basis of that measurement a microprocessor calculates the quantity of diluent liquid to add in order to obtain the dilution according to a predetermined factor, in such a way that the microprocessor then acts upon a peristaltic pump applying impulses to it of different duration which vary depending on the distance to the end point which has to be reached in the dilution, so that the first additions of diluent are large and they are gradually reduced until achieving the exact point of the dilution.

This type of device displays the drawback that the tank for the diluent is provided in a location away from the container receptacle of the sample to dilute, which means that the structure of the diluter cannot be compact, apart from the fact that the diluent liquid has to be pumped from the corresponding tank to the container holding the sample to dilute. This considerably increases the cost of the product since this type of pump controlled by a microprocessor is very expensive.

Moreover, the diluent tanks used display a rigid arrangement requiring the provision of an air inlet so that they can be emptied by means of the peristaltic pump, which compels the use of filters which allow the entrance of air into the tank and prevent contamination of the diluent liquid.

All these features increase the price of the device and they also mean that its structure is not compact and instead occupies a considerable space, which constitutes a drawback in laboratories.

### DESCRIPTION OF THE INVENTION

In order to achieve the objectives and solve the drawbacks pointed out above, the improvements of the invention are focused on achieving an automatic device which, as with conventional diluters, comprises a container receptacle of the mass to dilute, which is located on a loading cell regulated by a control circuit for measuring the mass of the sample to dilute and calculating the quantity of diluent liquid to add depending on the measurement made, and then, by regulating certain means of application of the diluent, the desired dilution is obtained according to a predetermined factor. The improvements of the invention are characterised in that it comprises a support combined into the diluter to which is vertically fixed the diluent tank on the container receptacle of the sample to dilute; and because the means of application of the diluent are defined by a pincer valve regulated by the control circuit so that the diluent can fall under gravity on the container receptacle.

This structure displays a compact arrangement in which the diluent tank is combined into the diluter, unlike with conventional diluters in which the diluent tank is separate from the structure of the diluter. Moreover, this structure avoids the use of peristaltic pumps which are replaced by a simple pincer valve permitting the application of the diluent on the sample by force of gravity, which considerably reduces the cost of the device.

Moreover, the invention is characterised in that the diluent device consists of a flexible bag the lower part of which includes the pincer valve for permitting it to be emptied without air entering inside, which likewise considerably reduces the cost of the device since it is not necessary to use diluent devices with air inlets containing a filter, which also avoids contamination of the diluent.

In the preferred embodiment of this invention, the container receptacle of the sample to dilute consists of a bag fixed to a support that is associated with the loading cell by means of magnets in order to facilitate its fitting and removal, and all this in a way that the said support keeps the bag open in order to permit the fall into its interior under gravity.

Below, in order to facilitate a better understanding of this specification and forming an integral part thereof, a series of figures is attached in which, by way of illustration only and not limiting, the object of the invention has been represented.

### BRIEF DESCRIPTION OF THE FIGURES

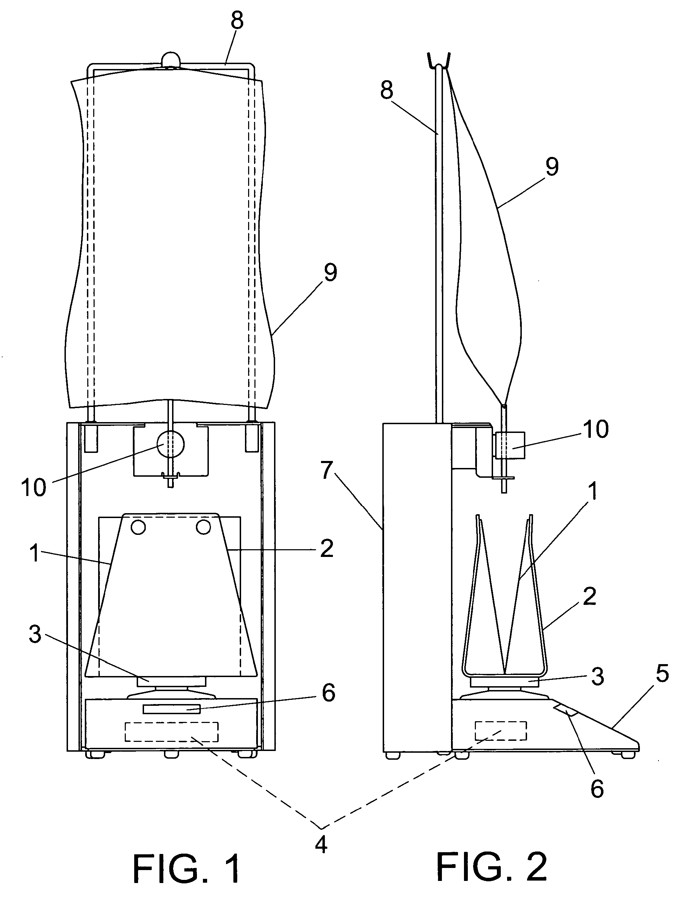

**Figure 1.**- Shows a front view of an example of embodiment of the diluter of the invention.
**Figure 2**.- Shows a side view of the diluter of the previous figure.

### DESCRIPTION OF A PREFERRED FORM OF EMBODIMENT

Given below is a description of the invention based on the figures commented upon above.

The invention comprises a container receptacle 1 of the sample to dilute, which consists of a bag fixed to a support 2 that is associated with a loading cell 3. The support 2 is fixed by means of magnets and it keeps the bag 1 open in order to permit the fall of the diluent, as shall be described further below.

The loading cell 3 is connected to a control circuit 4, based on a microprocessor, which is connected to a pincer valve 10 and to a screen 6 in which are shown the different measurements and calculations made. Both the control circuit 4 and the screen 6 are arranged in the interior of a casing 5 in which the loading cell 3 is likewise supported.

Provision is also made for the incorporation of a frame 7, which continues the casing 5 in which is fixed a support 8 for securing a diluent tank 9, in such a way that said diluent tank 9 is arranged vertically above the opening for the bag 1.

At this point it can be stated that the invention could dispense with the frame 7, so that the support 8 would be fixed directly on the structure of the casing 5, all this in such a way that the diluent tank 9 is arranged vertically above the opening for the bag 1.

In its lower part, the diluent tank 9 has an outlet consisting of a flexible tube which is made to pass through the throat of the pincer valve 10 whose opening and closing is regulated by the control circuit 4 as described below.

In order to effect the dilution, first of all the mass of the sample to dilute is placed in the bag 1 and the latter is fixed on the support with the mouth 2 open, all this is such a way that the pincer valve 10 stays closed so that the loading cell knows the weight of the sample to dilute and sends an analog signal to the microprocessor 4 which converts that analog signal into the corresponding digital signal, and on the basis of this and by means of the appropriate algorithm, it calculates the quantity of diluent liquid to add to the sample to be diluted in order to obtain the dilution according to a previously predetermined factor, the calculation made being stored in the memory of the microprocessor.

Via the screen 6, the microprocessor 4 displays the weight of the sample to dilute and the quantity of diluent to add or the quantity already added for achieving the proper dilution.

The microprocessor also generates a signal which it applies to the pincer valve 10 in order to perform its opening allowing the diluent to fall under gravity into the interior of the bag 2. The loading cell 3 signals the new weights obtained to the microprocessor 4, on the basis of which the microprocessor 4 calculates the quantity of diluent remaining to be added in order to achieve the desired dilution, displaying this on the screen 6 and it also recalculates the time for which the valve must remain open in order not to exceed the desired weight, with the process being repeated until the required dilution is achieved.

The receptacle of the diluent 9 comprises a soft-walled plastic bag similar to those used in hospitals for the application of serum or blood. This receptacle avoids contamination of the diluent, as was described in the section on the

### description of the invention.

Moreover, the structure that has been described displays a compact arrangement that is much less costly, and which occupies minimal space in the laboratory.

## Claims

1. **IMPROVEMENTS IN GRAVIMETRIC DILUTERS,** comprising a diluent tank (9), connected to means of application of the diluent, and a container receptacle (1) of the mass to dilute which is located above a loading cell (3) which is regulated by a control circuit (4) for measuring the mass of the sample to dilute and calculating the quantity of diluent liquid to add depending on the measurement made, and by regulating the means of application of the diluent it obtains the desired dilution according to a predetermined factor; the improvements are **characterised in that** they comprise a support (8), combined into the diluter, to which is vertically fixed the diluent tank (9) on the container receptacle (1) of the sample to dilute; the means of application of the diluent being determined by a pincer valve (10) regulated by the control circuit (4) so that the diluent can fall under gravity on the container receptacle (1) of the sample to dilute.

2. **IMPROVEMENTS IN GRAVIMETRIC DILUTERS,** according to claim 1, **characterised in that** the container receptacle (1) of the sample to dilute is fixed on a support (2) which is associated by means of magnets to the loading cell (3).

3. **IMPROVEMENTS IN GRAVIMETRIC DILUTERS,** according to any of claims 1 or 2, **characterised in that** the diluent tank (9) comprises a flexible bag the lower part of which includes the pincer valve (10) for allowing it to be emptied without the entrance of air on the receptacle (1).
